# EUROPEAN PATENT APPLICATION

(11) **EP 1 667 466 A1**
(43) Date of publication of application: **07.06.2006**
(21) Application number: 04292884.6
(22) Date of filing: 06.12.2004
(51) Int. Cl.: H04N 7/58, H04J 3/00

(54) **Method and apparatus for encoding or decoding two digital video signals arranged in a single-video signal path**

(71) Applicant: Thomson Licensing, 92100 Boulogne-Billancourt (FR)
(72) Inventor: Kuppens, Chris, 4904 VK Oosterhout (NL); Rotte, Joroen, 4835 GR Breda (NL); Van Rooy, Jan, 5235 EM 's-Hertogenbosch (NL)
(74) Representative: Hartnack, Wolfgang

(57) **Abstract**

In high-end professional video cameras a triax system is used for transferring various signals back and forth over a single coaxial cable between the camera and a base unit using frequency multiplexing. In current low-cost camera systems several signals are transferred as analogue signals over separate wires or cables. However, the analogue camera CVBS video output signal is replaced by a standard serial SDI signal from the camera to a base unit, achieving a maximum data rate of 270 Mbit/s.

According to the invention, a single SDI or HDSDI connection is used for transmitting a digital playback video signal as well as a digital teleprompter video signal from the base unit to the camera. A one-dimensional DPCM compression is used to reduce the data word length of the two video signals to be transmitted via the SDI/HDSDI connection. Each video signal component is DPCM encoded and DPCM decoded separately. The non-active line portions of the SDI/HDSDI signal are left untouched.

## Description

The invention relates to a method and to an apparatus for encoding or decoding two digital video signals arranged in a single-video signal path, e.g. an SDI or HDSDI format video signal path.

### Background

In the upper part of the market of professional video cameras a triax system is used for transferring various signals back and forth over a coaxial cable between the camera and a base unit. Transferring multiple signals in different direction over a single cable is feasible because frequency multiplexing is used in which to every type of signal a separate frequency band is assigned.
In the lower part of the market a multi-core adapter solution is currently being used.
In earlier systems all signals were transferred as analogue signals over separate wires or cables. Because no frequency multiplex/demultiplex is required such solution is much cheaper. However, a disadvantage is that the maximum distance between camera and base unit is restricted to about 100 meters, that the signals on the receiving side need to be equalised and that every additional meter of cable has a negative influence on the signal quality, e.g. the S/N ratio.
In current systems the analogue camera CVBS video output signal (Chroma Video Blanking Signal) is replaced by a standard serial SDI signal (Serial Digital Interface) achieving a maximum data rate of e.g. 270Mbit/s, 143Mbit/s, 360Mbit/s or 540Mbit/s for SDTV and 1.485Gbit/s for HDTV over a coaxial cable. The SDI video signal has a word length of 10 bit and a multiplexed 4:2:2 format. Its clock rate is 27 MHz. It is standardised in ANSI/SMPTE 259M and ANSI/SMPTE 125M.
At the receiving base unit this SDI signal is re-clocked and/or converted to CVBS format or Y-Cᵣ-C_{b} format (equivalent to Y-Pᵣ-P_{b} analog format). Thereby a degradation of the quality of the CVBS signal can be avoided. All the other signals in the multi-core cable remain in analog format.

### Invention

A single SDI or HDSDI (High Definition Serial Digital Interface) connection is designed for carrying a single digital video signal. However, it is desirable to transmit a digital playback video signal as well as a digital teleprompter (TP) video signal from the base unit to a camera.

A problem to be solved by the invention is to provide transmission of two digital video signals, in particular a playback video signal and a teleprompter video signal from a base unit to a professional camera, via a serial video signal connection designed for transmission of a single video signal. This problem is solved by the encoding and decoding methods disclosed in claims 1 and 2. A corresponding apparatus is disclosed in claims 3 and 4, respectively.

Only one SDI/HDSDI downstream and one SDI/HDSDI upstream form the link between camera and base unit. The upstream SDI/HDSDI signal contains two video signals, e.g. teleprompter video and playback video. These video signals are send back to the camera. Playback video, also known as external video, can be used by the cameraman for orientation purposes. Teleprompter video is used by news readers for displaying text on a monitor or any other display.
A differential pulse code modulation (DPCM) is used to reduce the data word length of the two video signals to be transmitted via the SDI or HDSDI connection. The two compressed video signals get an equal word length for each one of their data words, whereby both video signals get e.g. 5 bits per data word but from the resulting full range of 32 amplitude levels only 31 amplitude levels are occupied. As an alternative, to one of the two video signals (e.g. the teleprompter signal) a smaller data word length can be assigned than to the data word length of the other one (e.g. the playback signal). Thereby two compressed e.g. 8-bit multiplexed 4:2:2 signals are multiplexed into one e.g. 10-bit 4:2:2 stream.
The DPCM is a lossy compression which requires little resources only, i.e. it is a low-cost compression. It has a latency of less then 10 clock cycles and has a constant bit rate. The two compressed video streams fit transparently in a standard 270 Mbit/sec serial SDI video data stream. However, there is some loss of high frequencies.
All other or auxiliary data signals like synchronisation, data communication, private data, intercom and audio transport are also embedded in the SDI or HDSDI stream. For compatibility with analogue recording equipment some analogue signals can also be present on the adapter VTR plug that is the standard digital multi-core connector.

In principle, the inventive encoding method is suited for encoding a first and a second digital video signal using DPCM compression, the samples of each of which have a pre-selected original word length, into a combined video signal the code words of which have a pre-selected main word length that is smaller than two times said original word length, said method including the steps:
- from successive samples from lines of said first and second video signals, successively forming DPCM encoded values having a word length that is smaller than said pre-selected main word length, whereby the components of said first and second video signals are each DPCM encoded as a separate data stream;
- assembling corresponding DPCM encoded value pairs of a same component of said first and second video signals such that the bits of the value of said first video signal form lower bit positions of a code word of said combined video signal and the bits of the value of said second video signal form upper bit positions of the code word of said combined video signal, said upper bit positions being arranged adjacent to said lower bit positions;
- determining whether or not a code word of said combined video signal lies within a pre-determined value range and, if true, subtracting or adding a pre-determined offset value from or to said code word, respectively;
- successively outputting correspondingly assembled code words as said combined video signal.

In principle, the inventive decoding method is suited for decoding a combined video signal including two compressed video signals into a first and a second digital video signal, the samples of each of which have a pre-selected original word length, whereby the code words of said combined video signal have a pre-selected main word length that is smaller than two times said original word length, said method including the steps:
- receiving successive code words of said combined video signal and determining whether or not a code word of said combined video signal lies within a pre-determined value range and, if true, adding or subtracting a pre-determined offset value to or from said code word, respectively;
- parsing from said code word corresponding DPCM encoded value pairs of a same component of said first and second video signals, whereby lower bit positions of a code word of said combined video signal form the bits of a value of said first video signal and upper bit positions of a code word of said combined video signal form the bits of a value of said second video signal, said upper bit positions being arranged adjacent to said lower bit positions;
- from successive values from lines of said first and second video signals, forming DPCM decoded reconstructed sample values of said first and second video signals each having said pre-selected original word length, whereby the components of said first and second video signals are each DPCM decoded as a separate data stream;
- successively outputting said reconstructed sample values of said first and said second digital video signal.

In principle the inventive encoding apparatus is suited for encoding a first and a second digital video signal using DPCM compression, the samples of each of which have a pre-selected original word length, into a combined video signal the code words of which have a pre-selected main word length that is smaller than two times said original word length, said apparatus including:
- means being adapted for successively forming, from successive samples from lines of said first and second video signals, DPCM encoded values having a word length that is smaller than said pre-selected main word length, whereby the components of said first and second video signals are each DPCM encoded as a separate data stream;
- means being adapted for assembling corresponding DPCM encoded value pairs of a same component of said first and second video signals such that the bits of the value of said first video signal form lower bit positions of a code word of said combined video signal and the bits of the value of said second video signal form upper bit positions of the code word of said combined video signal, said upper bit positions being arranged adjacent to said lower bit positions;
- means being adapted for determining whether or not a code word of said combined video signal lies within a pre-determined value range and, if true, subtracting or adding a pre-determined offset value from or to said code word, respectively;
- means being adapted for successively outputting correspondingly assembled code words as said combined video signal.

In principle the inventive decoding apparatus is suited for decoding a combined video signal including two compressed video signals into a first and a second digital video signal, the samples of each of which have a pre-selected original word length, whereby the code words of said combined video signal have a pre-selected main word length that is smaller than two times said original word length, said apparatus including:
- means being adapted for receiving successive code words of said combined video signal and for determining whether or not a code word of said combined video signal lies within a pre-determined value range and, if true, adding or subtracting a pre-determined offset value to or from said code word, respectively;
- means being adapted for parsing from said code word corresponding DPCM encoded value pairs of a same component of said first and second video signals, whereby lower bit positions of a code word of said combined video signal form the bits of a value of said first video signal and upper bit positions of a code word of said combined video signal form the bits of a value of said second video signal, said upper bit positions being arranged adjacent to said lower bit positions;
- means being adapted for forming, from successive values from lines of said first and second video signals, DPCM decoded reconstructed sample values of said first and second video signals each having said pre-selected original word length, whereby the components of said first and second video signals are each DPCM decoded as a separate data stream;
- means being adapted for successively outputting said reconstructed sample values of said first and said second digital video signal.

Advantageous additional embodiments of the invention are disclosed in the respective dependent claims.

### Drawings

Exemplary embodiments of the invention are described with reference to the accompanying drawings, which show in:
- Fig. 1: a camera /base unit system including one SDI downlink and one SDI uplink connection;
- Fig. 2: 2-D representation of one complete picture;
- Fig. 3: sections of a complete line;
- Fig. 4: components of a line;
- Fig. 5: an orientation of two 5-bit compressed-stream data words within data words of a 10-bit stream;
- Fig. 6: block diagram of an encoder according to the invention;
- Fig. 7: block diagram of a decoder according to the invention;
- Fig. 8: the DPCM encoder used in the invention;
- Fig. 9: logarithmic transformation of the input sample value range to 31 levels;
- Fig. 10: the DPCM decoder used in the invention;
- Fig. 11: the DPCM decoder of Fig. 10 including a limiter.

### Exemplary embodiments

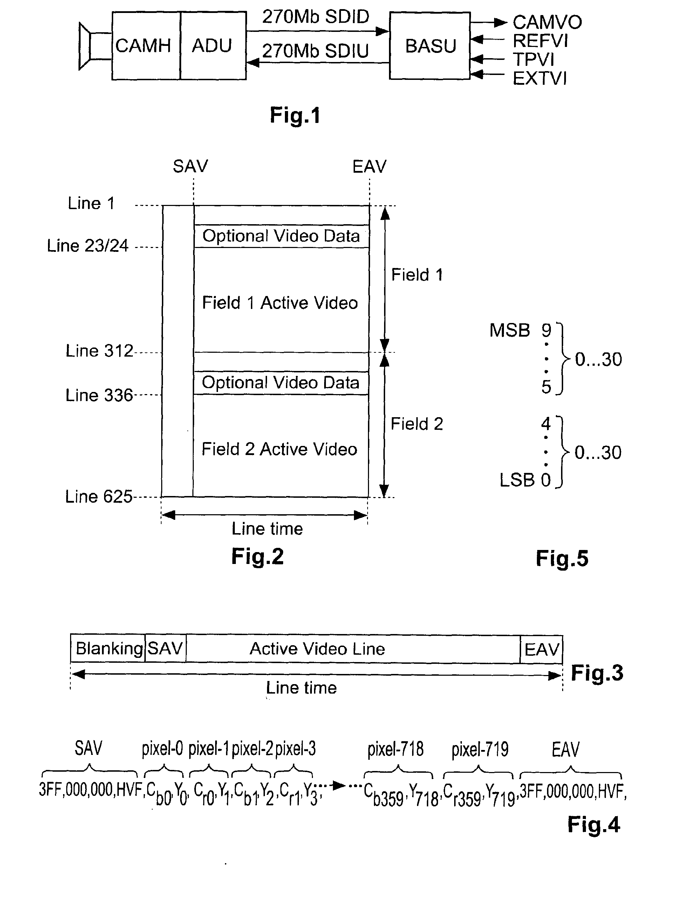

In Fig. 1 an adapter unit ADU is attached to a camera head CAMH. A base unit BASU receives a reference video input signal REFVI, a teleprompter video input signal TPVI and has an Extern video in terminal EXTVI for entering auxiliary signals. BASU outputs a camera video output signal CAMVO. The base unit sends to the adapter unit the above-described SDI/HDSDI upstream data stream SDIU carrying TP and Playback, and receives from the adapter unit an SDI/HDSDI downstream SDID carrying the camera video signal.

A video line is depicted in Fig. 3 and consists of the active video portion, a horizontal blanking section that can be used for embedding additional data and/or audio data, and a Start Active Video word SAV as well as an End Active Video word EAV. The inventive compression/decompression code replaces only the 1440 words (720 luma, 720 chroma) of the active video line section.

The line arrangement is depicted in more detail in Fig. 4. The SAV and EAV sections each consist of four data word sections, each including the HVF word which is a part of the Timing Reference Signal TRS and which signals the start and stop of horizontal, vertical and frame pulses H, V and F, respectively. Some parity bits are also located in this HVF timing word allowing to check and correct HVF if necessary. The H-, V- and F-pulses represent the total timing of the picture. For details see the above-mentioned SMPTE/ITU standards.

How the lines are arranged as a PAL or SECAM picture frame is shown in Fig. 2. Blanking, SAV and EAV is present in every line. Field 1 and field 2 each contain in total 312.5 lines. The active portion of field 1 starts with half line 23 or full line 24 and ends with full line 310. The active portion of field 2 starts with full line 336 and ends with full line 622 or half line 623.
For NTSC, field 1 and field 2 each contain in total 262.5 lines. The active portion of field 1 starts with full line 21 and ends with full line 262 or half line 263. The active portion of field 2 starts with half line 283 or full line 284 and ends with full line 525.
E.g. 19 lines before the start of the active fields 1 and 2 may contain optional video data.

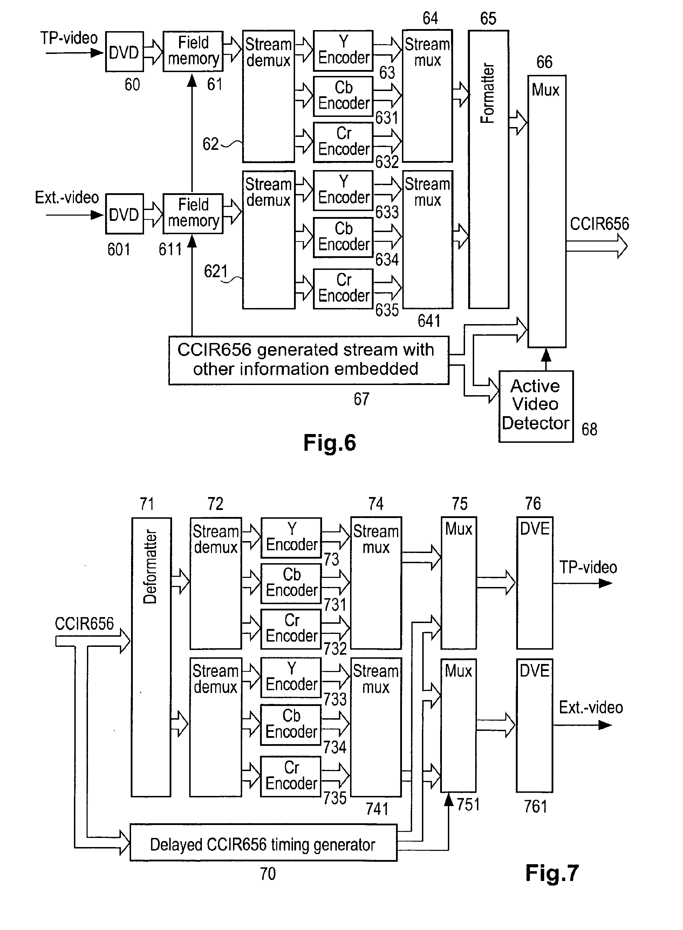

As shown in the compression schematic overview in Fig. 6, a TP-video input signal and an Ext-video input signal TPVI are each applied to a digital video decoder 60, 601 that generates a complete 8-bit ITU-R BT.656-4 / CCIR656 (SMPTE 259) compliant digital video stream. The field memories 61, 621 are needed for compensation in timing from the asynchronous input signal and for the following encoding. This timing compensation is configured such that both streams at the inputs of a respective stream demultiplexer 66 are synchronous. The demultiplexers 62 and 621 provide Y DPCM encoders 63, 633, C_{b} DPCM encoders 631, 634 and Cᵣ DPCM encoders 632, 635, respectively, with the corresponding sample values to be DPCM encoded, i.e. all three components of the input stream are compressed separately. Stream multiplexer 64 combines the DPCM compressed Y/C_{b}/Cᵣ data words of the TP-video signal and feeds them to a formatter 65. Stream multiplexer 641 combines the DPCM compressed Y/C_{b}/Cᵣ data words of the Ext-video signal and feeds them to formatter 65. Formatter 65 forms from every two DPCM encoded 5-bit data words one combined 10-bit data word matching the SDI format, and subtracts or adds offset values from or to specific ones of the 10-bit data word that will be described below. The select input of demultiplexer 66 is switched such that, using an active-video detector 68, only the active portion of the video line is replaced with the combined-data stream leaving other embedded data items and information in the stream intact. A CCIR656 timing generator 67 controls the field memories 61, 611, the active-video detector 68 and demultiplexer 66. This demultiplexer outputs a 10-bit ITU-R BT.656-4 /CCIR656 compliant data stream that is serially transferred via the SDI link SDIU.

As shown in the decompression schematic overview in Fig. 7, the de-serialised input 10-bit ITU-R BT.656-4 / CCIR656 digital video stream received from SDI link SDID can be directly connected to a deformatter 71 which separates the combined 10-bit data words into 5-bit data words for decompression, and which adds or subtracts offset values from or to specific ones of the 10-bit data word as will be described below. Demultiplexers 72, 721 provide Y DPCM decoders 73, 733, C_{b} DPCM decoders 731, 734 and Cᵣ DPCM decoders 732, 735, respectively, with the corresponding DPCM encoded values to be DPCM decoded, i.e. all three components of each input stream are decoded separately. Stream multiplexer 74 combines the resulting DPCM decoded Y/C_{b}/Cᵣ 8-bit data words of the TP-video signal and stream multiplexer 741 combines the DPCM compressed Y/C_{b}/Cᵣ 8-bit data words of the Ext-video signal, from which they are passed to multiplexers 75 and 751, respectively, in which the DPCM decoded TP-video data words and the DPCM decoded Ext-video data words are combined with sync signals provided by a delayed CCIR656 timing generator 70. Digital video encoders 76 and 761 perform the digital-to-analog-video reconstruction (CVBS) and output the video signals TP-video and Ext-video, respectively.

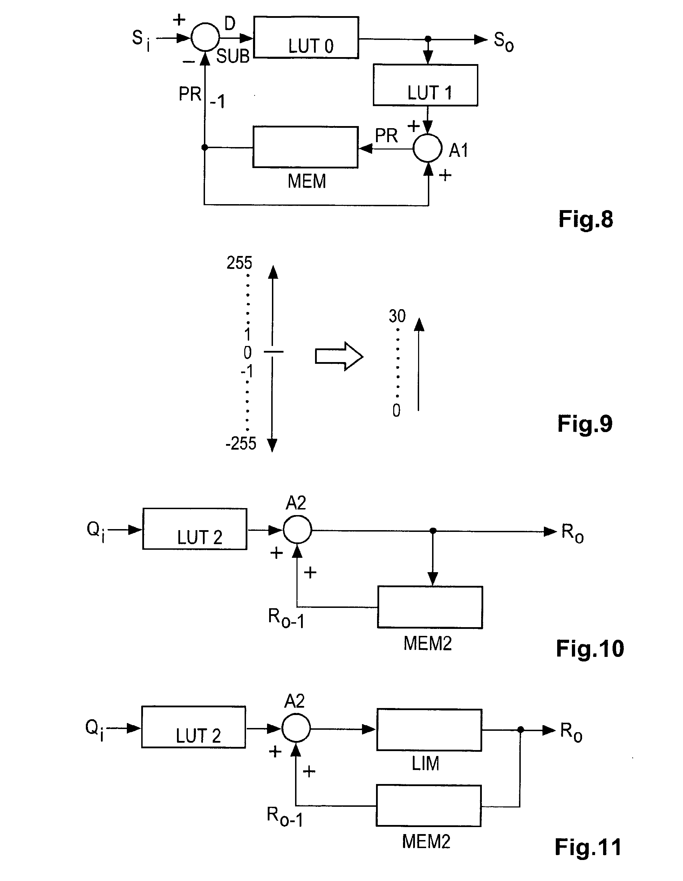

The operation of DPCM encoders 63 to 635 is shown in Fig. 8 in more detail. The encoder receives successive samples Si of a digital video input signal. These samples are taken from the successive lines of the video signal.
In the PAL, SECAM and NTSC TV systems the active video portion of one video line has 720 pixels with 1440 components. One video line includes 720 Y, 360 C_{b} and 360 Cᵣ samples. These components are arranged in a multiplexed fashion: C_{b}-Y-Cᵣ-Y-C_{b}-Y-Cᵣ-Y- etc., wherein Y represents e.g. an 8-bit luminance sample, C_{b} represents e.g. an 8-bit blue-component chrominance sample and Cᵣ represents a corresponding red-component chrominance sample. An encoding of a single stream of Y/C_{b}/Cᵣ data words would yield a degradation of the decoded signal and a higher amount of granular noise. Therefore the active video portion of a line is multiplexed into three separate streams:
Stream 1: Cb0, Cb1, Cb2, Cb3, ..., Cb357, Cb358, Cb359;
Stream 2: Cr0, Cr1, Cr2, Cr3, ..., Cr357, Cr358, Cr359;
Stream 3: Y0, Y1, Y2, Y3, ..., Y717, Y718, Y719,
i.e. the components of the video line are compressed separately.

In a first subtractor SUB a predicted sample value PR-₁ is subtracted from the current input sample value Si. The resulting difference value D enters a look-up table LUT0 that has the function of a quantiser compressing 9-bit to 5-bit. The corresponding DPCM encoded output value So has a word length of e.g. 5 bit, and is fed to a further look-up table LUT1 that has the function of an inverse quantiser decompressing 5-bit to 9-bit. The predicted sample value PR₋₁ represents a previously reconstructed sample value and is output from a memory MEM which stores cumulated difference values. The current reconstructed sample value PR is calculated in an adder A1 combining the current value output from the further look-up table LUT1 and the previously reconstructed sample value PR-₁ output from memory MEM, and is thereafter stored in memory MEM.

Several DPCM encoders 63 to 635 may operate in parallel. The possible amplitude values for every combined value resulting from the two 5-bit encoded values occupy a slightly limited range only within the 10-bit span in order to avoid interference with a Timing Reference Signal TRS.
Every multiplexed stream is considered as representing one group with a pre-defined start value per line. For component Y this start value is preferably '16' and for the both colour difference components C_{b}/Cᵣ it is preferably '128' for 8-bit component values. These start values normally represent video-black-level. Apart from the start value for each video line, the six DPCM compressors used are identical. As an alternative, the function of encoders 631/632 and 634/635 can be performed commonly by only two DPCM compressors for the colour components, i.e. four DPCM compressors instead of six are used in total. A 'compressed sample' can be considered as representing the difference (look-up table converted as logarithmic 8-bit plus parity to linear 4-bit plus parity) between the sample and the cumulative reconstructed sample of the same multiplexed stream.
A drawback of this DPCM compression is that a bit error in a video line will be visible during the remainder of that line. Therefore a limiter should be present in the corresponding DPCM decoder. Thereby, following an error, the remainder of the line is only commonly shifted in amplitude.

After compression and merging the two streams, care must be taken that these words do not corrupt synchronisation. In other words the values 0 ... 15 and 1008 ... 1023 must not occur in signal CCIR656 during the active video period. In the 8-bit format these values are 0, 1, 254 and 255. The two LSBs of the corresponding 10-bit values are cut off. The 8-bit encoding devices synchronise on codes same as described in the 10-bit systems, all bits '0' and '1'. If in the 10-bit system the values 0, 1, 2, 3, 1020, 1021, 1022 and 1023 occur and the lowest two LSBs are cut off, then these values would yield 0, 0, 0, 0, 255, 255, 255 and 255 in the 8-bit system. I.e., avoiding these eight values of the 10-bit system is not enough to avoid synchronisation problems in the 8-bit systems. To be on the safe side a forbidden value range of 16 or 32 values is used in the 10-bit system. With this expanded range, synchronisation corruption prevention is also valid for 8-bit encoders or systems.

Both 5-bit streams use 31 levels of the 32 levels available. The unused level of one stream is used in the formatter 65 to avoid the forbidden levels. An orientation of the two 5-bit compressed streams into the 10-bit stream is depicted in Fig. 5. If an above-mentioned forbidden value occurs, value '32' (i.e. an offset value) is subtracted whereby the forbidden range 0 ... 15 is now placed at 992 ... 1007. Subtracting '32' leads to the same result as adding '992' (= 1024-32) since the sum is always 10 bits without parity. At the de-compression side the range of the combined input values is checked. If an input value is in the range 992 ... 1007 then value '32' is added before DPCM decoding.

Returning to Fig. 8, as mentioned before only 31 amplitude levels are used from 32 possible amplitude levels in the 5-bit DPCM encoded data words. Besides amplitude level 'null' the other amplitude levels are grouped as ±15 levels symmetric around null. The difference D between the predicted sample value PR-₁ and the input sample Sᵢ (which can have an amplitude value lying in the range 255 ... -255) is logarithmic transformed and placed on 31 amplitude levels as depicted in Fig. 9.

The following table contains example values for look-up tables LUT0 and LUT1:

| **Level** | **Input range** | **LUT0 encode** | **LUT1 LUT2 decode** | **Level** | **Input range** | **LUT0 encode** | **LUT1 LUT2 decode** |
|---|---|---|---|---|---|---|---|
| **15** | 255...200 | 30 | 200 | **-15** | -255...-200 | 14 | -200 |
| **14** | 199...156 | 29 | 156 | **-14** | -199...-156 | 13 | -156 |
| **13** | 155...121 | 28 | 121 | **-13** | -155...-121 | 12 | -121 |
| **12** | 120...94 | 27 | 94 | **-12** | -120...-94 | 11 | -94 |
| **11** | 93...73 | 26 | 73 | **-11** | -93...-73 | 10 | -73 |
| **10** | 72...56 | 25 | 72 | **-10** | -72...-56 | 9 | -72 |
| **9** | 55...43 | 24 | 55 | **-9** | -55...-43 | 8 | -55 |
| **8** | 42...33 | 23 | 33 | **-8** | -42...-33 | 7 | -33 |
| **7** | 32...25 | 22 | 25 | **-7** | -32...-25 | 6 | -25 |
| **6** | 24...18 | 21 | 18 | **-6** | -24...-18 | 5 | -18 |
| **5** | 17...13 | 20 | 13 | **-5** | -17...-13 | 4 | -13 |
| **4** | 12...10 | 19 | 10 | **-4** | -12...-10 | 3 | -10 |
| **3** | 9...7 | 18 | 7 | **-3** | -9...-7 | 2 | -7 |
| **2** | 6...4 | 17 | 4 | **-2** | -6...-4 | 1 | -4 |
| **1** | 3...1 | 16 | 1 | **-1** | -3...-1 | 0 | -1 |
| **0** | 0 | 15 | 0 | | | | |

An amplitude step in the video signal encodes as one or several amplitude jumps from coarse to fine, finally reaching the desired level when the difference signal D becomes zero.

A corresponding decoder as shown in Fig. 10 receives successive encoded quantised values Qᵢ of a 5-bit input signal from successive lines of the video signal. The range of the combined 10-bit input values is checked before in deformatter 71. If a 10-bit input value is in the range 992 ... 1007 then value '32' (i.e. an offset value) is added (leading to the same result as subtracting '992') before DPCM decoding the separated 5-bit input signals.
Several DPCM decoders 73 to 735 may operate in parallel which together output the active video portion for six separate component streams. The input values Qi pass through a look-up table LUT2 that has the function of an inverse quantiser decompressing 5-bit to 9-bit. The current reconstructed sample value R_{O} is calculated in an adder A2 combining the current value output from look-up table LUT2 and the previously reconstructed sample value R_{O-1} output from a sum memory MEM2, and is thereafter stored in memory MEM2, for example an 8-bit register.
Before decoding an encoded video line the sum value stored in memory MEM2 is set to a predetermined value (i.e. the same value that was used when encoding): e.g. '16' for Y and '128' for C_{b} and for Cᵣ. Decompression look-up table LUT2 includes the same values as compression look-up tables LUT0 and LUT1.

The DPCM decoder as depicted in Fig. 11 corresponds to that of Fig. 10 except that a limiter LIM is arranged between the output of adder A2 and the output/input of memory MEM2. In case of a bit error, limiter LIM prevents the reconstructed output samples R_{O} rolling over amplitude value '253' or rolling under amplitude value '2', i.e. the amplitude limiter has a lower threshold value and an upper threshold value.

After decoding, each stream is inserted back into the original timing frame as described in connection with Fig. 7.

The numbers given in this description, e.g. the word lengths, can be adapted to different applications of the invention as required.

## Claims

1. Method for encoding a first (TP-video) and a second (Ext-video) digital video signal using DPCM compression, the samples of each of which have a pre-selected original word length, into a combined video signal (CCIR656, SDIU) the code words of which have a pre-selected main word length that is smaller than two times said original word length, said method including the steps:
- from successive samples from lines of said first and second video signals, successively forming (SUB, LUT0, LUT1, A1, MEM) DPCM encoded values having a word length that is smaller than said pre-selected main word length, whereby the components (Y, Cᵣ, C_{b}) of said first and second video signals are each DPCM encoded (63 - 635) as a separate data stream;
- assembling (65) corresponding DPCM encoded value pairs of a same component of said first and second video signals such that the bits of the value of said first video signal form lower bit positions (LSB0 - 4) of a code word of said combined video signal and the bits of the value of said second video signal form upper bit positions (MSB9 - 5) of the code word of said combined video signal, said upper bit positions being arranged adjacent to said lower bit positions;
- determining (65) whether or not a code word of said combined video signal lies within a pre-determined value range and, if true, subtracting or adding a pre-determined offset value from or to said code word, respectively;
- successively outputting (66) correspondingly assembled code words as said combined video signal (CCIR656, SDIU).

2. Method for decoding a combined video signal (CCIR656, SDIU) including two compressed video signals into a first (TP-video) and a second (Ext-video) digital video signal, the samples of each of which have a pre-selected original word length, whereby the code words of said combined video signal have a pre-selected main word length that is smaller than two times said original word length, said method including the steps:
- receiving (71) successive code words of said combined video signal and determining whether or not a code word of said combined video signal lies within a pre-determined value range and, if true, adding or subtracting a pre-determined offset value to or from said code word, respectively;
- parsing (71) from said code word corresponding DPCM encoded value pairs of a same component of said first and second video signals, whereby lower bit positions (LSB0 - 4) of a code word of said combined video signal form the bits of a value of said first video signal and upper bit positions (MSB9 - 5) of a code word of said combined video signal form the bits of a value of said second video signal, said upper bit positions being arranged adjacent to said lower bit positions;
- from successive values from lines of said first and second video signals, forming (LUT2, A2, MEM2) DPCM decoded reconstructed sample values of said first and second video signals each having said pre-selected original word length, whereby the components (Y, Cᵣ, C_{b}) of said first and second video signals are each DPCM decoded (73 - 735) as a separate data stream;
- successively outputting (75, 76) said reconstructed sample values of said first (TP-video) and said second (Ext-video) digital video signal.

3. Apparatus for encoding a first (TP-video) and a second (Ext-video) digital video signal using DPCM compression, the samples of each of which have a pre-selected original word length, into a combined video signal (CCIR656, SDIU) the code words of which have a pre-selected main word length that is smaller than two times said original word length, said apparatus including:
- means (SUB, LUT0, LUT1, A1, MEM) being adapted for successively forming, from successive samples from lines of said first and second video signals, DPCM encoded values having a word length that is smaller than said pre-selected main word length, whereby the components (Y, Cᵣ, C_{b}) of said first and second video signals are each DPCM encoded (63 - 635) as a separate data stream;
- means (65) being adapted for assembling corresponding DPCM encoded value pairs of a same component of said first and second video signals such that the bits of the value of said first video signal form lower bit positions (LSB0 - 4) of a code word of said combined video signal and the bits of the value of said second video signal form upper bit positions (MSB9 - 5) of the code word of said combined video signal, said upper bit positions being arranged adjacent to said lower bit positions;
- means (65) being adapted for determining whether or not a code word of said combined video signal lies within a pre-determined value range and, if true, subtracting or adding a pre-determined offset value from or to said code word, respectively;
- means (66) being adapted for successively outputting correspondingly assembled code words as said combined video signal (CCIR656, SDIU).

4. Apparatus for decoding a combined video signal (CCIR656, SDIU) including two compressed video signals into a first (TP-video) and a second (Ext-video) digital video signal, the samples of each of which have a pre-selected original word length, whereby the code words of said combined video signal have a pre-selected main word length that is smaller than two times said original word length, said apparatus including:
- means (71) being adapted for receiving successive code words of said combined video signal and for determining whether or not a code word of said combined video signal lies within a pre-determined value range and, if true, adding or subtracting a pre-determined offset value to or from said code word, respectively;
- means (71) being adapted for parsing from said code word corresponding DPCM encoded value pairs of a same component of said first and second video signals, whereby lower bit positions (LSB0 - 4) of a code word of said combined video signal form the bits of a value of said first video signal and upper bit positions (MSB9 - 5) of a code word of said combined video signal form the bits of a value of said second video signal, said upper bit positions being arranged adjacent to said lower bit positions;
- means (LUT2, A2, MEM2) being adapted for forming, from successive values from lines of said first and second video signals, DPCM decoded reconstructed sample values of said first and second video signals each having said pre-selected original word length, whereby the components (Y, Cᵣ, C_{b}) of said first and second video signals are each DPCM decoded (73 - 735) as a separate data stream;
- means (75, 76) being adapted for successively outputting said reconstructed sample values of said first (TP-video) and said second (Ext-video) digital video signal.

5. Method according to claims 1 or 2, or apparatus according to claims 3 or 4, wherein said combined video signal (CCIR656, SDIU) is fed from a base unit (BASU) to a camera unit (CAMH, ADU).

6. Method according to one of claims 1, 2 and 5, or apparatus according to one of claims 3 to 5, wherein said combined video signal (CCIR656, SDIU) has a format of a standardised-format single video signal, e.g. an SDI or HDSDI format signal having a data word length of 10 bits.

7. Method or apparatus according to claim 6, wherein said. combined video signal (CCIR656, SDIU) fed from said base unit (BASU) to said camera unit (CAMH, ADU) has a 270Mbit SDI format and wherein the camera output video signal is fed from said camera unit to said base unit as a 10-bit 270 Mbit SDI format signal.

8. Method or apparatus according to claim 7, wherein said first video signal is a teleprompter signal (TP-video) to the code words of which a length of 5 bits is assigned but from the resulting 32 possible values only 31 values are used, and wherein said second video signal is a playback signal (Ext-video) to the code words of which a length of 5 bits is assigned but from the resulting 32 possible values only 31 values are used.

9. Method or apparatus according to claim 8 wherein, if in said encoding a combined binary code word in said combined video signal would get a value in a forbidden range '0' to '15', the value '32' is subtracted or the value '992' is added, and in the corresponding decoding the value '32' is added or the value '992' is subtracted if a received value is in the range '992' to '1007'.

10. Method according to one of claims 2 and 5 to 9, or apparatus according to one of claims 4 to 9, wherein in said decoding an amplitude limiter is used that has a lower threshold value and an upper threshold value.
